## Europäisches Patentamt

## European Patent Office

## Office européen des brevets

(11) Publication number: **0 202 350**
**B1**

## (12) EUROPEAN PATENT SPECIFICATION

(45) Date of publication of patent specification: **17.08.88**

(51) Int. Cl.⁴: **A 23 G 3/30,** A 23 G 9/02

(21) Application number: **85106235.6**

(22) Date of filing: **21.05.85**

(54) A soft starchy chewing gum.

(43) Date of publication of application:
26.11.86 Bulletin 86/48

(45) Publication of the grant of the patent:
17.08.88 Bulletin 88/33

(84) Designated Contracting States:
DE FR GB IT SE

(56) References cited:
EP-A-0 053 844
DE-A-3 010 836
FR-A- 703 978
FR-A-2 542 318
US-A-3 862 338
US-A-4 254 148
US-A-4 514 423

CHEMICAL ABSTRACTS, vol. 93, no. 7, August
1980, page 768, abstract no. 69113b,
Columbus, Ohio, US;

(73) Proprietor: LOTTE CO., LTD
No. 3-20-1, Nishi-Shinjuku
Shinjuku-ku Tokyo (JP)

(72) Inventor: Sato, Yoshinori
2-8-21, Nishibori
Niiza-Shi Saitama (JP)
Inventor: Tsuchiya, Yukio
329 Buick Street
Battle Creek Michigan 49015 (US)
Inventor: Fujimoto, Keiji
1-19-19, Numakage
Urawa-Shi Saitama (JP)

(74) Representative: Müller, Hans-Jürgen, Dipl.-Ing.
et al
Müller, Schupfner & Gauger Lucile-Grahn-
Strasse 38 Postfach 80 13 69
D-8000 München 80 (DE).

Courier Press, Leamington Spa, England.

**0 202 350**

**Description**

This invention relates to a soft starchy chewing gum, more particularly to a chewing gum having a consistency similar to a soft rice cake and containing in substitution for a portion or all of sweetener an α-starch glue of substantially amylopectin.

There have hitherto been proposed several types of chewing gum, which are soft or do not harden in an atmosphere of low temperature (for example, Japanese Patent Publication 46347/82, Japanese Application 78560/81 and Japanese Application 198051/82). These types of chewing gum, however, relate to gum base compositions, but not to chewing gum per se comprising a gum base, a malt honey, other sweeteners (such as sugars and artificial sweeteners), flavors and softeners. It is usually known that the malt honey or the softness (such as glycerol) should be added in an increased amount in order to maintain soft consistency of the chewing gum. It is also well-known that the malt honey is added to the chewing gum not only as a sweetener but also for the purpose of imparting softness thereto, and that the latter effect may be enhanced by addition of an aqueous solution of sugars or sugar alcohols, an aqueous solution of vegetable gum, as well as softeners, such as glycerol and propylene glycol. These prior arts may impart the softness to the chewing gum at a relatively low temperature, but cannot maintain the softness and harden at a low temperature below 0°C, such as −10°C, leading to its brittleness and deterioration of taste.

On the other hand, it is also well-known that sugars of low sweetness, such as glucose, lactose, maltose or dextrin may be utilized in substitution for saccharose in order to reduce the sweetness of the chewing gum. However, these ingredients have disadvantages of increasing a powdery feeling and of significantly hardening the chewing gum due to agglutination.

It has now been found, as a result of diligent study for producing a chewing gum capable of maintaining its softness throughout a year even at low temperature, that substitution of an α-starch gel consisting of substantially amylopectin for a portion or all of the malt honey may achieve an improved soft chewing gum. By selecting other sugars in combination with the α-starch gel, the chewing gum of low sweetness may be obtained, which is able to keep its softness at a low temperature even below 0°C.

Further, it has now been found that in case of the chewing gum containing the α-starch glue an increased water content up to about 12%, which has hitherto been known to deteriorate quality of the chewing gum, may provide a novel type of chewing gum having consistency similar to a soft rice cake.

Accordingly, an object of the invention is to provide a soft starchy chewing gum capable of maintaining softness at a low temperature below 5°C or even below 0°C.

Another object of the invention is to provide a soft chewing gum of low sweetness containing dextrin of DE 2 to 50 as a main sweetener in combination with the α-starch glue.

A further object of the invention is to provide a novel type of chewing gum having consistency similar to a soft rice cake by keeping characteristics of chewing gum.

A still further object of the invention is to provide a soft starchy chewing gum of the rice cake consistency, which encloses or contains a center filling, such as bean jam, jelly or the like.

The above objects may be achieved, in accordance with the invention, by the means and measures, resp, claimed in claim 1.

In accordance with the invention, the chewing gum having consistency similar to a soft rice cake may be obtained by incorporating the total water content of between 0.3, preferably 5.5, and 12% by weight and subjecting the chewing gum to a rice cake shaping machine.

Further, in accordance with the invention, the chewing gum of the rice cake consistency may be fabricated into a stuffed chewing gum containing a center filling.

The α-starch gel may be preferably incorporated into the chewing gum as a Turkish delight consisting of sugar, starch, syrup, honey, whipped whites of eggs, gelatine and preferably nuts or almonds which has been heat-treated together with a portion of sweetening sugar.

In accordance with the invention, the α-starch of substantially 100% amylopectin may be selected from glutinous rice, glutinous corn or, glutinous barley which is substantially free of amylose. Conveniently, rice-flour is used.

The α-starch gel useful in the invention may be prepared in the following procedure, for example: The starch, such as the rice-flour, is kneaded with an adequate amount of water with preventing formation of lumps and then steamed over a powerful fire for 20 to 30 minutes. The steamed mass is then placed into water for cooling and thereafter is subjected to a pounding treatment by means of a rice cake machine or a dumpling mixer for providing glutinous consistency. Thereafter, a portion of sugar or other sweeteners may be incorporated, if desired, with heating to form a Turkish delight, to which may be further formulated a material previously prepared from an egg white and water. When subjecting to the heat teratment, a ratio of the starch (consisting of substantially 100% amylopectin) to water is in the range of 1:0.5—3, preferably 1:1—2. In other words, a ratio of the rice-flour to water is in such a range that the resulting Turkish delight contains 20 to 50% by weight of water. A water content below a ratio of 0.5 gives excessive elasticity which may deteriorate a texture of the chewing gum, while a water content above a ratio of 3 provides excessive softness which may cause deterioration with time.

The α-starch gel thus prepared is incorporated into the chewing gum in substitution for a portion or all of the malt honey, in which case an aliquot of water derived from the malt honey may be replenished with a corresponding amount of water contained in the α-starch gel. An amount of the α-starch gel incorporated

2

into the chewing gum is in such a range that the resulting chewing gum contains about 0.3 to about 12% by weight of water. In this case, the water content of about 5.5 to 12% by weight may provide the chewing gum of rice cake consistency.

In general, the α-starch containing amylose is known to be converted to a hard β-form. On the contrary, the α-starch gel as defined herein consists of substantially 100% amylopectin and is free of amylose, so that the conversion to the β-form (or hardening phenomenon) may be prevented.

The sweetening sugars as used in the invention may be monosaccharides (such as glucose, fructose and xylose), disaccharides (such as sucrose, maltose and lactose), polysaccharides (such as dextrins), sugar alcohols (such as sorbitol, malthitol and xylitol), isomerized sugar and inverted sugar. The use of sucrose as the main sweetener may provide the chewing gum retaining softness at a low temperature even below −10°C, which the use of dextrin of DE 2 to 50 as the main sweetener may provide the soft chewing gum of low sweetness.

Other ingredients, such as gum base, flavors and softeners may be well-known in the art. The soft starchy chewing gum according to the invention may be prepared in any conventional procedure and apparatus which are well-known in the art.

The chewing gum of rice cake consistency may be fabricated into any conventional form of rice cake or into a stuffed chewing gum containing a center filling, such as bean jam, jelly, ice cream, chocolate, caramel or the like. In the case of the combination of the chewing gum according to the invention with the cold confectionary, the gum base for the cold purpose is preferably used, as described in Japanese Patent Publications 46347/82 and 8819/83, both of which are assigned to the applicant. The former discloses the gum base comprising 5 to 15% of natural resins, 10 to 13% of vinyl acetate resins, 6 to 8% of ester gum and 15 to 25% of rubbers for the plate type chewing gum, while the latter patent discloses the gum base comprising 25 parts of natural rubbers, 19 parts of synthetic rubbers, 30 parts of vinyl acetate resins, 15 parts of wax, 16 parts of fillers for the bubble chewing gum.

The invention will be described with reference to the non-limiting Examples.

Example 1

This Example illustrates the chewing gum retaining softness even below 0°C.

The chewing gum according to the invention was prepared, using the α-starch gel A (water content of 36.5%) or the α-starch gel B (water content of 32.0%) and other ingredients as shown in Table below. A comparative chewing gum was also prepared by the same procedure and ingredients except for the α-starch gel.

| Ingredients | Comp. Ex. 1 | Ex. 1 | Ex. 2 |
|---|---|---|---|
| Gum base | 150$^{Kg}$ | 150$^{Kg}$ | 150$^{Kg}$ |
| Sugar | 300 | 300 | 300 |
| Glucose | 80 | 103.5 | 101.2 |
| Malt honey (water content of 15%) | 40 | — | — |
| α-Starch gel A (water content of 36.5%) | — | 16.5 | — |
| α-Starch gel B (water content of 32.0%) | — | — | 18.8 |
| Glycerol | 5 | 5 | 5 |
| Strawberry flavor | 3 | 3 | 3 |
| Total | 578$^{Kg}$ | 578$^{Kg}$ | 578$^{Kg}$ |
| Total water content | 1.04% | 1.04% | 1.04% |

The chewing gums thus prepared were tested for penetration of a loaded needle and breaking strength according to conventional methods. The results are shown in the following table.

0 202 350

|  | Comp. Ex. 1 | Ex. 1 | Ex. 2 |
|---|---|---|---|
| Penetration (load 100 g, 5 sec.) | 2 (n=7) | 18 (n=7) | 20 (n=7) |
| Breaking strength (rheometer, Kg/cm²) | 17.5 (n=3) | 9.0 (n=3) | 8.5 (n=3) |

Example 2

This Example illustrates the soft chewing gum of low sweetness with a curry flavor.

The soft chewing gum of low sweetness was prepared, using the α-starch gel C (water content of 28.75%) or the α-starch gel D (water content of 22.3%) in combination with sugars and dextrin of DE 25, as well as other ingredients, as shown in Table below. A comparative chewing gum using the malt honey but excluding the α-starch gel was also prepared in the same procedure.

| Ingredients | Comp. Ex. 2 | Ex. 3 | Ex. 4 |
|---|---|---|---|
| Gum base | 175$^{Kg}$ | 175$^{Kg}$ | 175$^{Kg}$ |
| Glucose | 95 | 60 | 60 |
| Maltose | 63 | 40 | 40 |
| Lactose | 31 | 20 | 20 |
| Malt honey (water content of 15%) | 34.4 | — | — |
| Dextrin (DE 25) | 150 | 150 | 150 |
| α-Starch gel C (water content of 28.75%) | — | 108.4 | — |
| α-Starch gel D (water content of 22.3%) | .— | — | 140 |
| Curry powder | 10.4 | 10.4 | — |
| Seasoning | 26.2 | 26.2 | — |
| Refined salt | 5 | — | 5 |
| Curry flavor | 5.5 | 5.5 | 5.5 |
| Total | 595.5$^{Kg}$ | 595.5$^{Kg}$ | 595.5$^{Kg}$ |
| Total water content | 0.87% | 5.23% | 5.24% |

The chewing gum thus prepared were evaluated in an organoleptic test by means of a panel consisting of 15 members. The results are shown in the following Table.

|  | Comp. Ex. 2 | Ex. 3 | Ex. 4 |
|---|---|---|---|
| Hardening on chewing | 0 | 6 | 9 |
| Feeling | 0 | 10 | 5 |
| Taste strength | 2 | 7 | 6 |
| Taste durability | 4 | 5 | 6 |

4

In the above experiments, the following composition of the α-starch gel A to D were used:

|  | A | B | C | D |
|---|---|---|---|---|
| Rice-flour | 19.2 | 25.0 | 22.0 | 17.0 |
| Sugar | 38.5 | 25.0 | 22.0 | 17.0 |
| Malt honey (water content of 25%) | — | 23.0 | 29.4 | 22.8 |
| Maltose syrup (Brix 75) | 7.7 | — | — | — |
| Egg white | — | 0.8 | 0.5 | 0.5 |
| Curry powder | — | — | — | 7.4 |
| Seasoning | — | — | — | 18.7 |
| Refined salt | — | — | 4.7 | — |
| Water | 34.6 | 26.2 | 21.4 | 16.6 |
| Total | 100 | 100 | 100 | 100 |
| Water content (%) | 36.5 | 32.0 | 28.75 | 22.3 |

As apparent from the above results, the incorporation of the α-starch gel in substitution for a portion or all of the malt honey may provide the soft chewing gum retaining the softness at the low temperature. Further, the combined use of the dextrin of DE 2 to 50 may provide the soft chewing gum of low sweetness.

Example 3

Two types of Turkish delight were prepared for use in the following Examples 4 and 5, using rice-flour of substantially amylopectin.

|  | A | B |
|---|---|---|
| Rice-flour | 17 parts by wt. | 18 parts by wt. |
| Sugar | 37.5 | 30 |
| Malt honey (water content of 25%) | — | 20 |
| Egg white | 0.5 | — |
| Water | 45 | 31 |
| Total | 100 | 100 |
| Water content | 45 | 36 |

Examples 4 and 5 including comparatives 3 and 4

The chewing gums of rice cake consistency according to the invention were prepared, using the Turkish delight A and B as described in Example 3, and other ingredients as shown in Table below. Comparative chewing gums were also prepared in the same manner but using the malt honey in place of the Turkish delight.

**0 202 350**

| Ingredients | Ex. 4 | Ex. 5 | Comp. Ex. 3 | Comp. Ex. 4 |
|---|---|---|---|---|
| Gum base | parts 150 | parts 150 | parts 150 | parts 150 |
| Sugar | 200 | 200 | 200 | 240 |
| Glucose | 147 | 100 | 100 | 100 |
| Malt honey (water content of 25%) | — | 40 | 100 | 60 |
| Turkish delight A (water content of 45%) | 73 | — | — | — |
| Turkish delight B (water content of 36%) | — | 80 | — | — |
| Glycerol | 5 | 5 | 15 | 15 |
| Sorbitol solution (water content of 30%) | — | — | 10 | 10 |
| Flavor | 3 | 3 | 3 | 3 |
| Total | 578 | 578 | 578 | 578 |
| Water content | 5.70% | 6.71% | 4.84% | 3.11% |

The chewing gums of Example 4 and Comparative 3 were evaluated in an organoleptic test by a panel consisting of 30 members. The results are shown in the following table.

| | Ex. 4 | Comp. 3 | No. Diff. |
|---|---|---|---|
| Hardness on chewing | members 11 | members 5 | members 14 |
| Elasticity | 25 | 3 | 2 |
| Smoothness | 7 | 8 | 15 |
| Feeling of rice cake | 25 | 1 | 4 |
| Voluminous feeling | 23 | 1 | 6 |
| Overall evaluation | 25 | 2 | 3 |

The chewing gums of Example 5 and Comparative 4 were fabricated into stuffed chewing gums containing jam as a center filling by means of an enveloping machine. These two stuffed chewing gums were evaluated in another organoleptic test by a panel consisting of 30 members. The results are shown in the following table.

|  | Ex. 5 | Comp. 4 | No. Diff. |
|---|---|---|---|
|  | members | members | members |
| Hardness on chewing | 28 | 0 | 2 |
| Integrality feeling | 25 | 2 | 3 |
| Elasticity | 18 | 7 | 5 |
| Smoothness | 10 | 6 | 14 |
| Voluminous feeling | 15 | 8 | 7 |
| Feeling of rice cake | 26 | 0 | 4 |
| Overall evaluation | 18 | 4 | 8 |

Comparison of Example 4 with Comparative 3 shows that the substitution of the Turkish delight for all of the malt honey provides a significant property of rice cake.

Comparison of Example 5 with Comparative 4 also shows that the substitution of the Turkish delight for a portion of the malt honey provide a significant property of rice cake.

Example 6 and comparative 5

A soft chewing gum of low sweetness having a consistency of rice cake was prepared, using ingredients as shown in Table below. A comparative chewing gum also prepared by the same procedure but excluding the Turkish delight.

| Ingredients | Ex. 6 | Comp. 5 |
|---|---|---|
| Gum base | 175 | 175 |
| Glucose | 60 | 60 |
| Maltose | 40 | 40 |
| Lactose | 20 | 20 |
| Malt honey (water content of 25%) | — | 146 |
| Dextrin (DE 25) | 150 | 150 |
| Turkish delight A (water content of 45%) | 146 | — |
| Flavor | 3 | 3 |
| Refined salt | 2 | 2 |
| Total | 596 | 596 |
| Water content | 11% | 6.12% |

Comparison of Example 6 with Comparative 5 shows that the substitution of the Turkish delight A for all of the malt honey provides a very soft chewing gum of rice cake consistency, and that Comparative 5 provides a semi-fluid chewing gum which is deformed upon standing.

The chewing gum of Example 6 was fabricated into a stuffed chewing gum enclosing a bean jam by means of an enveloping machine. A usual stuffed rice cake hardened within four days and was infected with molds, whereas the stuffed chewing gum of the invention neither hardened nor infected for two weeks. Upon chewing, the stuffed chewing gum of the invention was converted from the rice cake consistency to a bubble gum texture of good expansion.

## Claims

1. A soft starch chewing gum of a general composition comprising a gum base, starch, sweeteners, flavors and other materials, characterized in that the chewing gum contains, in substitution for a portion or all of a sweetening malt honey, α-starch gel prepared by intensively steam-treating the starch of substantially 100% amylopectin for 20—30 minutes with a ratio of starch to water being in the range of 1:0.5—3, and in that the chewing gum contains a total water content of 0.3 to 12% by weight.

2. A soft starchy chewing gum according to claim 1, characterized in that the chewing gum contains the total water content of between 0.3 and 5.5% of weight.

3. A soft starchy chewing gum according to claim 1 or 2, characterized in that the sweetener comprises primarily sucrose for keeping softness at a temperature below 0°C.

4. A soft starchy chewing gum according to claim 1 or 2, characterized in that the sweetener comprises primarily dextrin of DE 2 to 50 having low sweetness.

5. A soft starchy chewing gum according to one of the preceding claims, characterized in that it is formed as a rice cake.

6. A soft starchy chewing gum according to claim 5, characterized in that the form of the rice cake is stuffed with a center filling.

7. A soft starchy chewing gum according to claim 6, characterized in that the center filling is selected from a jam, a jelly, a nougat, a caramel, an ice cream or a bean jam.

## Patentansprüche

1. Weicher, stärkehaltiger Kaugummi einer allgemeinen Zusammensetzung aus: einer Gummibasis, Stärke, Süßstoffen, Geschmackstoffen und anderen Stoffen, dadurch gekennzeichnet, daß der Kaugummi als Ersatz für eine Teil- oder die Gesamtmenge eines süßenden Malzhonigs α-Stärkegel enthält, das hergestellt ist durch intensive Dampfbehandlung der aus im wesentlichen 100% Amylopektin bestehenden Stärke für 20—30 min, wobei das Verhältnis Stärke:Wasser im Bereich von 1:0,5—3 liegt, und daß der Kaugummi einen Gesamtwassergehalt von 0,3—12 Gew.-% hat.

2. Weicher stärkerhaltiger Kaugummi nach Anspruch 1, dadurch gekennzeichnet, daß der Kaugummi einen Gesamtwassergehalt zwischen 0,3 und 5,5 Gew.-% hat.

3. Weicher stärkerhaltiger Kaugummi nach Anspruch 1 oder 2, dadurch gekennzeichnet, daß der Süßstoff hauptsächlich Saccharose umfaßt, um bei einer Temperatur unterhalb 0°C weiche zu bleiben.

4. Weicher stärkehaltiger Kaugummi nach Anspruch 1 oder 2, dadurch gekennzeichnet, daß der Süßstoff hauptsächlich Dextrin mit DE 2 bis 50, das geringe Süße hat, aufweist.

5. Weicher stärkehaltiger Kaugummi nach einem der vorhergehenden Ansprüche, dadurch gekennzeichnet, daß er als Reiskuchen geformt ist.

6. Weicher stärkehaltiger Kaugummi nach Anspruch 5, dadurch gekennzeichnet, daß die Reiskuchenform in der Mitte mit einem Füllstoff gefüllt ist.

7. Weicher stärkehaltiger Kaugummi nach Anspruch 6, dadurch gekennzeichnet, daß die Mittenfüllung eine Konfitüre, ein Gelee, ein Nougat, ein Karamel, eine Eiskrem oder eine Sojabohnenkonfitüre ist.

## Revendications

1. Chewing-gum amylacé mou possédant une composition générale incluant une base de gomme, de l'amidon, des agents sucrants, des substances aromatiques et d'autres substances, caractérisé en ce que le chewing-gum contient, en remplacment d'une partie ou de la totalité de miel de malt sucrant, un gel d'amidon α préparé par traitement intensif à l'étuvée de l'amidon formé de sensiblement 100% d'amylopectine pendant 20—30 minutes avec un rapport de l'amidon à l'eau situé dans la gamme de 1:0,5—3, et en ce que le chewing-gum contient une teneur globale en eau comprise entre 0,3 et 12% en poids.

2. Chewing-gum amylacé mou selon la revendication 1, caractérisé en ce que le chewing-gum contient une teneur totale en eau comprise entre 0,3 et 5,5% en poids.

3. Chewing-gum amylacé mou selon la revendication 1 ou 2, caractérisé en ce que l'agent sucrant comprend essentiellement de la saccharose servant à conserver l'état mou à une température inférieure à 0°C.

4. Chewing-gum amylacé mou selon la revendication 1 ou 2, caractérisé en ce que l'agent sucrant comprend principalement de la dextrine de DE 2 à 50, possédant un caractère faiblement sucré.

5. Chewing-gum amylacé selon l'une quelconque des revendications précédentes, caractérisé en ce qu'il est réalisé sous la forme d'un gâteau de riz.

6. Chewing-gum amylacé mou selon la revendication 5, caractérisé en ce que la forme du gâteau de riz est fourrée avec un remplissage central.

7. Chewing-gum amylacé mou selon la revendication 6, caractérisé en ce qu'on choisit comme remplissage central une confiture, une gelée, un nougat, un caramel, une crème glacée ou une confiture de haricots.